# EUROPEAN PATENT APPLICATION

(11) **EP 4 657 592 A1**
(43) Date of publication of application: **03.12.2025**
(21) Application number: 25179215.6
(22) Date of filing: 27.05.2025
(51) Int. Cl.: H01M 10/0567, H01M 4/134, H01M 4/38, H01M 4/587, H01M 10/0525, H01M 10/0569

(54) **ELECTROCHEMICAL DEVICE AND ELECTRONIC DEVICE**

(30) Priority: 30.05.2024 CN 202410692695
(71) Applicant: Ningde Amperex Technology Ltd., Ningde City, Fujian Province 352100 (CN)
(72) Inventor: ZHANG, Jiaming, Ningde City, Fujian Province, China, 352100 (CN); JIAN, Junhua, Ningde City, Fujian Province, China, 352100 (CN); TANG, Chao, Ningde City, Fujian Province, China, 352100 (CN)
(74) Representative: Icosa

(57) **Abstract**

An electrochemical device includes a negative electrode plate and an electrolyte solution. The negative electrode plate includes a negative electrode material layer. The negative electrode material layer includes a silicon-carbon negative electrode material. The silicon-carbon negative electrode material includes a dopant element. The dopant element includes at least one of elements B, P, or S. The electrolyte solution includes a compound represented by Formula I and fluoroethylene carbonate.

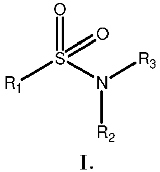

## Description

### TECHNICAL FIELD

This application relates to the electrochemical field, and in particular, to an electrochemical device and an electronic device.

### BACKGROUND

With the rapid development of electronic products, lithium-ion batteries are widely used in mobile phones, laptop computers, tablet computers, unmanned aerial vehicles, electric vehicles, electric tools, power storage systems, and the like by virtue of advantages such as a high energy density, miniaturization, and a light weight. Especially in the 3C product sector, consumer demand for a longer battery life of electronic products remains very high, thereby placing higher requirements on the energy density of lithium-ion batteries. To further increase the energy density of a lithium-ion battery, an electrode material of a high specific capacity needs to be used. Silicon-based materials, as a type of alloyed negative electrode material, can provide an ultra-high specific capacity of up to 4200 mAh/g, making the silicon-based materials highly promising for increasing the energy density. However, after the silicon-based materials are lithiated, a lithium-silicon alloy is formed. The lithium-silicon alloy is of high reactivity and is extremely prone to attack solvent molecules in the electrolyte solution, resulting in rapid consumption of the electrolyte solution and loss of active lithium, and in turn, posing a problem of inferior cycle performance.

### SUMMARY

An objective of this application is to provide an electrochemical device and an electronic device to improve cycle performance of the electrochemical device. Specific technical solutions are as follows:
A first aspect of this application provides an electrochemical device, including a negative electrode plate and an electrolyte solution. The negative electrode plate includes a negative electrode material layer. The negative electrode material layer includes a silicon-carbon negative electrode material.

The silicon-carbon negative electrode material includes a dopant element. The dopant element includes at least one of elements B, P, or S. Based on a total mass of the silicon-carbon negative electrode material, a mass percent of the dopant element is 0.1% to 2%.

The electrolyte solution includes a compound represented by Formula I and fluoroethylene carbonate.

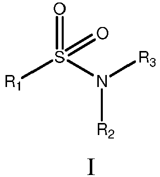

In the formula above, R₁ is selected from a fluorine atom, a C₁ to C₁₀ alkyl group fully or partially fluorinated, a C₆ to C₁₀ aryl group fully or partially fluorinated, a C₁ to C₁₀ oxygen-containing alkyl group fully or partially fluorinated, or a C₆ to C₁₀ oxygen-containing aryl group fully or partially fluorinated; an O atom in R₁ is not directly bonded to an S atom; and R₂ and R₃ each are independently selected from an unsubstituted or fluorinated C₁ to C₅ alkyl group or an unsubstituted or fluorinated C₆ to C₁₀ aryl group, where "fluorinated" may be perfluorinated or polyfluorinated; and R₂ and R₃ are bondable to form a ring.

In an embodiment of this application, based on a total mass of the negative electrode material layer, a mass percent of silicon is 15% to 40%.

In an embodiment of this application, based on a total mass of the negative electrode material layer, a mass percent of the silicon-carbon negative electrode material is 30% to 85%.

In an embodiment of this application, the compound represented by Formula I includes at least one of the following compounds:

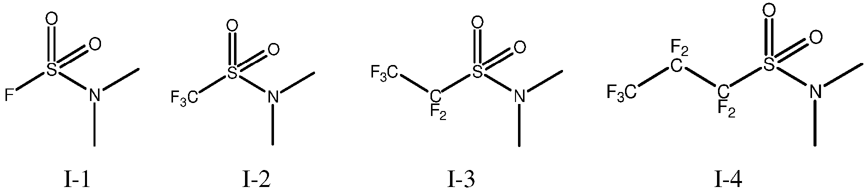

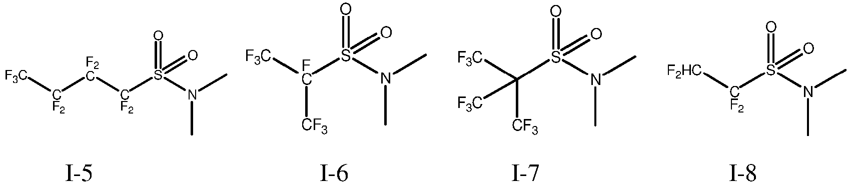

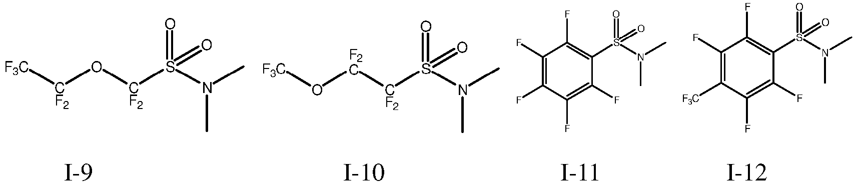

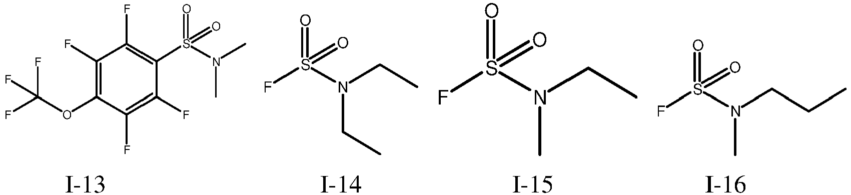

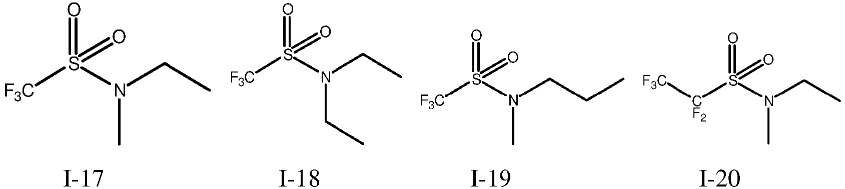

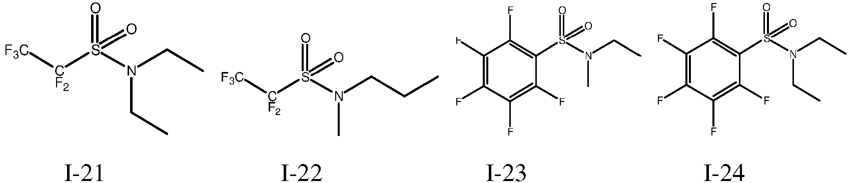

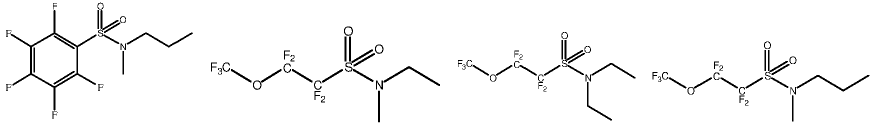

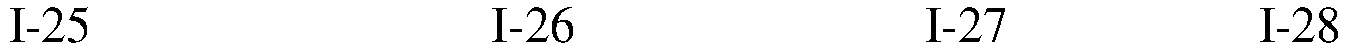

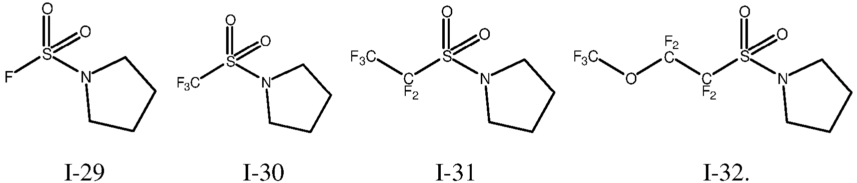

In an embodiment of this application, based on a total mass of the electrolyte solution, a mass percent of the compound represented by Formula I is 3% to 50%, and preferably 3% to 20%.

In an embodiment of this application, based on a total mass of the electrolyte solution, a mass percent of the fluoroethylene carbonate is 5% to 30%, and preferably 5% to 15%.

In an embodiment of this application, the electrolyte solution includes a nitrile compound. The nitrile compound includes at least one of succinonitrile, adiponitrile, 1,3,6-hexanetrinitrile, glutaronitrile, methylglutaronitrile, pimelonitrile, suberonitrile, azelanitrile, or sebaconitrile. Based on a total mass of the electrolyte solution, a mass percent of the nitrile compound is 0.1% to 5%.

In an embodiment of this application, the electrolyte solution further includes a first constituent. The first constituent includes at least one of dimethyl carbonate or diethyl carbonate. Based on a total mass of the electrolyte solution, a mass percent of the first constituent is 5% to 35%.

In an embodiment of this application, the electrolyte solution further includes a second constituent. The second constituent includes at least one of ethyl acetate, propyl acetate, propyl propionate, butyl acetate, ethyl butyrate, or ethyl isobutyrate. Based on a total mass of the electrolyte solution, a mass percent of the second constituent is 5% to 35%.

A second aspect of this application provides an electronic device. The electronic device includes the electrochemical device according to the first aspect of this application.

Some of the beneficial effects of this application are as follows:
This application provides an electrochemical device and an electronic device. The electrochemical device includes a negative electrode plate and an electrolyte solution. The electrolyte solution includes a compound represented by Formula I and fluoroethylene carbonate FEC. The negative electrode plate includes a negative electrode material layer. The negative electrode material layer includes a silicon-carbon negative electrode material. The silicon-carbon negative electrode material includes a dopant element. The dopant element includes at least one of elements B, P or S. The silicon-carbon negative electrode material is an excellent negative electrode material. The surface of the silicon-carbon negative electrode material is coated with the dopant element, and the dopant element can suppress side reactions between silicon with the electrolyte solution to a some extent. However, during long-term cycling, silicon still contacts the electrolyte solution to produce side reactions, thereby resulting in continuous generation of a solid electrolyte interface (SEI) film, and consuming the active lithium in the battery. The fluoroethylene carbonate is a good electrolyte additive, and can form a crosslinked, highly tough polymer protection layer at the electrode interface during chemical formation of the electrochemical device, thereby greatly improving the cycle performance of the electrochemical device. However, the fluoroethylene carbonate is consumed at a fast speed in the electrochemical device, and forms a relatively thick polymer layer, thereby hindering the transmission of lithium ions to some extent. The added compound represented by Formula I can form an S- and N-rich passivation layer of a lithium-containing inorganic compound on the positive and negative electrode interfaces, thereby alleviating the excessive polymerization of the FEC, and in turn, synergistically forming a relatively thin SEI layer or cathode electrolyte interface (CEI) layer, improving the interface performance of the electrochemical device, and improving the cycle performance of the electrochemical device.

Definitely, a single product or method in which the technical solution of this application is implemented does not necessarily achieve all of the above advantages concurrently.

### DETAILED DESCRIPTION

The following clearly and fully describes the technical solutions in the embodiments of this application. Apparently, the described embodiments are merely a part of but not all of the embodiments of this application. All other embodiments derived by a person skilled in the art based on this application still fall within the protection scope of this application.

It is hereby noted that in specific embodiments of this application, this application is construed by using a lithium-ion battery as an example of the electrochemical device, but the electrochemical device according to this application is not limited to the lithium-ion battery.

FEC is an excellent film-forming additive used for repairing the damaged SEI film on the surface of silicon particles. However, the FEC is consumed at a fast speed, and excessive content of the FEC added leads to inferior cycle performance of the lithium-ion battery. Therefore, by adding a substance containing a -SO₂N- group, this application forms an interface film rich in inorganic substances such as Li₃N and Li₂S on the surfaces of the positive and negative electrodes, thereby reducing the damage of the SEI film on the surface of the silicon particles and the damage of the CEI film, reducing the consumption of the FEC and the electrolyte solvent, and in turn, improving the long-term cycle stability of the battery.

A first aspect of this application provides an electrochemical device, including a negative electrode plate and an electrolyte solution. The negative electrode plate includes a negative electrode material layer. The negative electrode material layer includes a silicon-carbon negative electrode material.

The silicon-carbon negative electrode material includes a silicon-carbon composite. The silicon-carbon composite includes a dopant element. The dopant element includes at least one of elements B, P, or S. Based on a total mass of the silicon-carbon negative electrode material, the mass percent of the dopant element is 0.1% to 2%. For example, the mass percent of the dopant element may be 0.1%, 0.2%, 0.3%, 0.5%, 1.0%, 1.5%, 2.0%, or a value falling within a range formed by any two thereof. Without being limited to any theory, the applicant hereof finds that when the surface of the silicon-carbon negative electrode material is coated with a dopant element and the mass percent of the dopant element is 0.1% to 2%, the dopant element improves the transmission efficiency of lithium ions in the silicon-carbon negative electrode material during charging and discharging, thereby further improving the cycle performance of the lithium-ion battery.

The electrolyte solution includes a compound represented by Formula I and fluoroethylene carbonate.

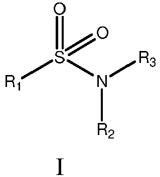

In the formula above, R₁ is selected from a fluorine atom, a C₁ to C₁₀ alkyl group fully or partially fluorinated, a C₆ to C₁₀ aryl group fully or partially fluorinated, a C₁ to C₁₀ oxygen-containing alkyl group fully or partially fluorinated, or a C₆ to C₁₀ oxygen-containing aryl group fully or partially fluorinated; an O atom in R₁ is not directly bonded to an S atom; and R₂ and R₃ each are independently selected from an unsubstituted or fluorinated C₁ to C₅ alkyl group or an unsubstituted or fluorinated C₆ to C₁₀ aryl group, where "fluorinated" may be perfluorinated or polyfluorinated; and R₂ and R₃ are bondable to form a ring.

Without being limited to any theory, the applicant hereof finds that the fluoroethylene carbonate is a good film-forming additive on the negative electrode surface, but the oxidation stability of the fluoroethylene carbonate on the positive electrode side is not enough. When fluoroethylene carbonate is used together with the compound represented by Formula I, a passivation layer can be formed on the positive electrode surface, thereby not only retaining the good film-forming properties of the fluoroethylene carbonate on the negative electrode surface, but also reducing the oxidative decomposition of the fluoroethylene carbonate at the positive electrode interface. The compound represented by Formula I and the fluoroethylene carbonate used in combination endow the lithium-ion battery with higher cycle performance. In addition, because the surface of the silicon-carbon negative electrode material contains at least one of elements B, S, or P, the elements interact synergistically with the compound represented by Formula I and the fluoroethylene carbonate to further improve the cycle performance of the lithium-ion battery.

In an embodiment of this application, the dopant element is introduced by coating the surface of the silicon-carbon negative electrode material with an inorganic material. The inorganic material includes at least one of B₂O₃, Na₅P₃O₁₀, or Li₂S.

In an embodiment of this application, based on a total mass of the negative electrode material layer, a mass percent of silicon is 15% to 40%. For example, based on the total mass of the negative electrode material layer, the mass percent of silicon may be 15%, 20%, 25%, 30%, 35%, 40%, or a value falling within a range formed by any two thereof. In addition, the silicon is introduced by the silicon-carbon negative electrode material, and the mass percent of silicon can be adjusted by increasing the content of the silicon-carbon negative electrode material during the preparation of the negative electrode plate. Without being limited to any theory, the applicant hereof finds that when the mass percent of silicon is 15% to 40%, the high energy density characteristics of the silicon-carbon negative electrode material can be fully leveraged. In addition, this mass percent is more conducive to prolonging the service life of the lithium-ion battery, thereby improving the overall performance of the lithium-ion battery.

In an embodiment of this application, based on a total mass of the negative electrode material layer, a mass percent of the silicon-carbon negative electrode material is 30% to 85%. The mass percent of the silicon-carbon negative electrode material may be 30%, 35%, 40%, 45%, 50%, 55%, 60%, 65%, 70%, 75%, 80%, 85%, or a value falling within a range formed by any two thereof. Without being limited to any theory, the applicant hereof finds that when the mass percent of the silicon-carbon negative electrode material is 30% to 85%, the high energy density characteristics of the silicon-carbon negative electrode material can be fully leveraged, thereby increasing the energy density of the lithium-ion battery without giving rise to performance degradation caused by the excessive amount of the silicon-carbon material.

The negative electrode material layer of this application may further include a carbon material. The carbon material may be at least one selected from natural graphite, artificial graphite, mesocarbon microbeads, hard carbon, or soft carbon. Based on the total mass of the negative electrode material layer, the mass percent of the carbon material may be 15% to 70%.

In an embodiment of this application, the compound represented by Formula I includes at least one of the following compounds:

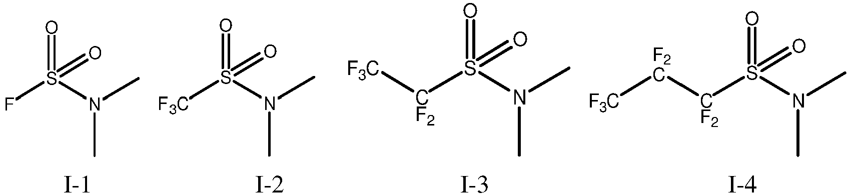

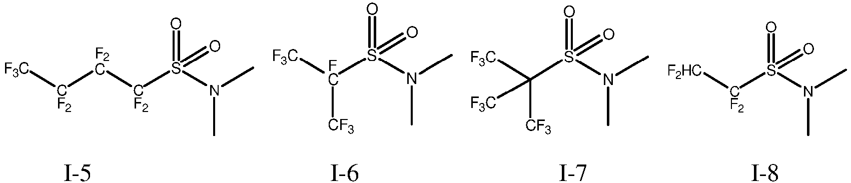

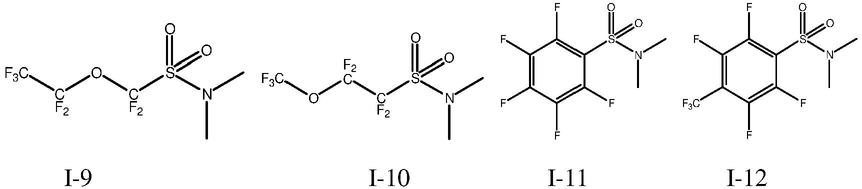

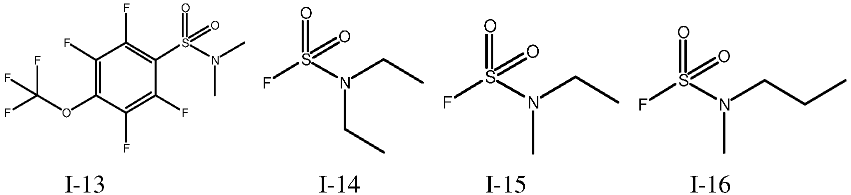

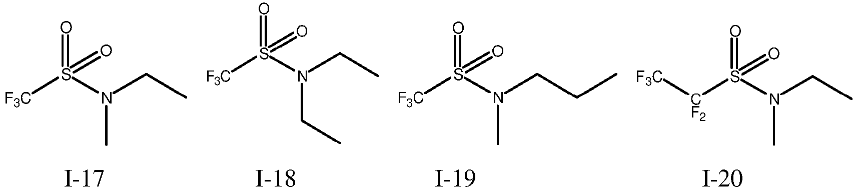

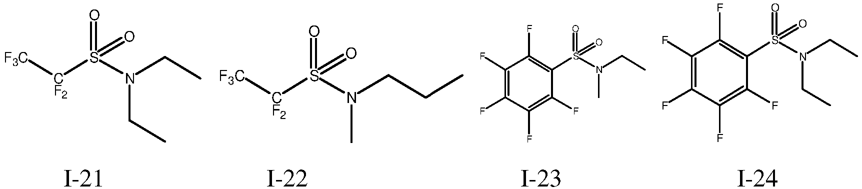

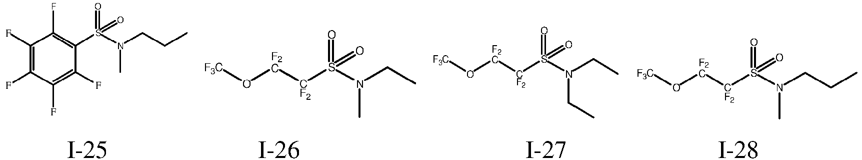

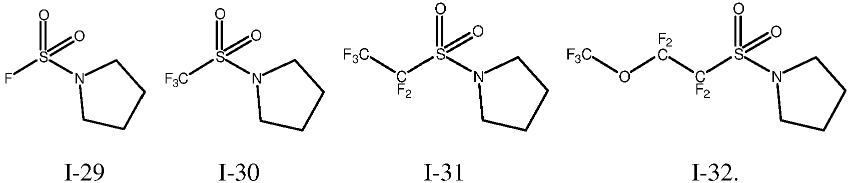

According to an embodiment of this application, the compound represented by Formula I may be prepared by a method known in the art or commercially purchased.

In an embodiment of this application, based on the total mass of the electrolyte solution, the mass percent of the compound represented by Formula I is 3% to 50%, and preferably 3% to 20%. For example, the mass percent of the compound represented by Formula I may be 3%, 5%, 10%, 15%, 20%, 25%, 30%, 35%, 40%, 45%, 50%, or a value falling within a range formed by any two thereof. Without being limited to any theory, by controlling the mass percent of the compound represented by Formula I to fall within 3% to 50%, the compound can coordinate with the FEC to produce a passivation interface on the electrode surface, thereby improving the cycle performance of the lithium-ion battery.

In an embodiment of this application, the electrolyte solution includes fluoroethylene carbonate. Based on the total mass of the electrolyte solution, the mass percent of the fluoroethylene carbonate is 5% to 30%, and preferably 5% to 15%. For example, the mass percent of the fluoroethylene carbonate may be 5%, 10%, 15%, 20%, 25%, 30%, or a value falling within a range formed by any two thereof. Without being limited to any theory, by controlling the mass percent of the fluoroethylene carbonate to fall within 5% to 40%, this application facilitates the FEC in forming an SEI film of a suitable thickness without increasing the interface impedance that obstructs ion transmission on the interface, thereby improving the cycle performance of the lithium-ion battery. This design also prevents the FEC from being excessively decomposed on the positive electrode side and thus producing gas in large quantities, thereby achieving cycle stability in a balanced manner.

In an embodiment of this application, the electrolyte solution includes a nitrile compound. The nitrile compound includes at least one of succinonitrile, adiponitrile, 1,3,6-hexanetrinitrile, glutaronitrile, methylglutaronitrile, pimelonitrile, suberonitrile, azelanitrile, or sebaconitrile. Based on a total mass of the electrolyte solution, a mass percent of the nitrile compound is 0.1% to 5%. For example, the mass percent of the nitrile compound may be 0.1%, 0.5%, 1.0%, 1.5%, 2.0%, 2.5%, 3.0%, 3.5%, 4.0%, 4.5%, 5.0%, or a value falling within a range formed by any two thereof. Without being limited to any theory, the nitrile compound can effectively stabilize transition metal elements, thereby enhancing the stability of the positive electrode interface and improving the cycle performance of the lithium-ion battery.

In an embodiment of this application, the electrolyte solution further includes a first constituent. The first constituent includes at least one of dimethyl carbonate or diethyl carbonate. Based on a total mass of the electrolyte solution, a mass percent of the first constituent is 5% to 35%. For example, the mass percent of the first constituent may be 5%, 10%, 15%, 20%, 25%, 30%, 35%, or a value falling within a range formed by any two thereof. Without being limited to any theory, the viscosity of the dimethyl carbonate and the diethyl carbonate is relatively low, thereby reducing the viscosity of the electrolyte solution and the bulk impedance of the electrolyte solution, and improving the ion transport capability of the electrolyte solution. Added together with the compound represented by Formula I, the dimethyl carbonate and the diethyl carbonate introduced into the electrolyte solution can further improve the cycle performance of the lithium-ion battery.

In an embodiment of this application, the electrolyte solution further includes a second constituent. The second constituent includes at least one of ethyl acetate, propyl acetate, propyl propionate, butyl acetate, ethyl butyrate, or ethyl isobutyrate. Based on a total mass of the electrolyte solution, a mass percent of the second constituent is 5% to 35%. For example, the mass percent of the second constituent may be 5%, 10%, 15%, 20%, 25%, 30%, 35%, or a value falling within a range formed by any two thereof. Without being limited to any theory, the viscosity of the second constituent is relatively low, thereby reducing the viscosity of the electrolyte solution and the bulk impedance of the electrolyte solution, and improving the ion transport capability of the electrolyte solution. Added together with the compound represented by Formula I, the second constituent introduced into the electrolyte solution can further improve the cycle performance of the lithium-ion battery.

In this application, the electrolyte solution further includes a lithium salt. The lithium salt is not particularly limited, and may be any lithium salt well known in the art, as long as the objectives of this application can be achieved. For example, the lithium salt may be at least one selected from LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, or LiPO₂F₂. For example, the lithium salt may be LiPF₆. Based on the mass of the electrolyte solution, the mass percent of the lithium salt may be 8% to 20%. For example, the mass percent of the lithium salt may be 8%, 10%, 12%, 13%, 15%, 18%, 20%, or a value falling within a range formed by any two thereof.

The nonaqueous solvent is not particularly limited herein, as long as the objectives of this application can be achieved. For example, the nonaqueous solvent may include, but is not limited to, at least one of a carbonate ester compound, a carboxylate ester compound, an ether compound, or other organic solvents.

The carbonate ester compound may include, but is not limited to, at least one of a chain carbonate ester compound, a cyclic carbonate ester compound, or a fluorocarbonate ester compound. The chain carbonate ester compound may include, but is not limited to, dipropyl carbonate (DPC), methyl propyl carbonate (MPC), ethylene propyl carbonate (EPC), or ethyl methyl carbonate (EMC). The cyclic carbonate ester compound may include, but is not limited to, at least one of ethylene carbonate (EC), propylene carbonate (PC), butylene carbonate (BC), or vinyl ethylene carbonate (VEC). The fluorocarbonate ester compound may include, but is not limited to, at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate ester compound may include, but is not limited to, at least one of methyl formate, methyl acetate, methyl propionate, ethyl propionate, γ-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The above-mentioned other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The mass percent of the nonaqueous solvent in the electrolyte solution is not particularly limited herein, as long as the objectives of this application can be achieved.

The mass percent of the nonaqueous solvent in the electrolyte solution is not particularly limited herein, as long as the objectives of this application can be achieved. For example, based on the mass of the electrolyte solution, the mass percent of the nonaqueous solvent is 0% to 73.9%.

In this application, the electrochemical device further includes a positive electrode plate. The positive electrode plate includes a positive current collector and a positive electrode material layer disposed on at least one surface of the positive current collector. The "positive electrode material layer disposed on at least one surface of the positive current collector" means that the positive electrode material layer may be disposed on one surface of the positive current collector or on both surfaces of the positive current collector along the thickness direction of the current collector. It is hereby noted that the "surface" here may be the entire region of the surface of the positive current collector, or a partial region of the surface of the positive current collector, without being particularly limited herein, as long as the objectives of the application can be achieved.

The positive current collector is not particularly limited herein, as long as the objectives of this application can be achieved. For example, the positive current collector may include aluminum foil, aluminum alloy foil, a composite current collector (for example, an aluminum-carbon composite current collector), or the like.

The positive electrode material layer includes a positive active material. The positive active material is not particularly limited herein as long as the objectives of this application can be achieved. For example, the positive active material may include, but is not limited to, at least one of lithium nickel cobalt manganese oxide (for example, NCM811, NCM622, NCM523, or NCM111), lithium nickel cobalt aluminum oxide, lithium iron phosphate, a lithium-rich manganese-based material, lithium cobalt oxide (LiCoO₂), lithium manganese oxide, lithium manganese iron phosphate, or lithium titanium oxide.

The positive electrode material layer may further include a conductive agent and a binder. The types of the conductive agent and the binder are not particularly limited herein, as long as the objectives of this application can be achieved. The mass percentages of the positive active material, the conductive agent, and the binder in the positive electrode material layer are not particularly limited herein, and may be selected by a person skilled in the art as actually needed, as long as the objectives of this application can be achieved.

The thicknesses of the positive current collector and positive electrode material layer are not particularly limited herein, as long as the objectives of this application can be achieved. For example, the thickness of the positive current collector is 5 µm to 20 µm. The thickness of the positive electrode material layer on a single side is 30 µm to 120 µm.

Optionally, the positive electrode plate may further include a conductive layer. The conductive layer is located between the positive current collector and the positive electrode material layer. The composition of the conductive layer is not particularly limited, and may be a conductive layer commonly used in the art. The conductive layer includes a conductive agent and a binder. The conductive agent and binder in the conductive layer are not particularly limited herein. For example, the conductive agent and binder may be at least one of the conductive agents and binders enumerated above.

In this application, the electrochemical device further includes a separator. The separator is not particularly limited herein, as long as the objectives of this application can be achieved. For example, the separator may be made of a material including but not limited to at least one of: a polyethylene (PE)- or polypropylene (PP)-based polyolefin (PO), a polyester (such as polyethylene terephthalate (PET) film), cellulose, polyimide (PI), polyamide (PA), spandex, or aramid. The type of the separator may include a woven film, a nonwoven film, a microporous film, a composite film, a calendered film, or a spinning film.

In some embodiments of this application, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film.

Optionally, the surface treatment layer is disposed on at least one surface of the substrate layer. The surface treatment layer may be a polymer layer or an inorganic compound layer, or a layer compounded of a polymer and an inorganic compound.

In some embodiments of this application, the inorganic compound layer includes inorganic particles and a binder. The inorganic particles are not particularly limited herein. For example, the inorganic particles may include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited herein. For example, the binder may be at least one of the above-mentioned binders. In some embodiments of this application, the polymer layer includes a polymer. The material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-co-hexafluoropropylene).

In some embodiments of this application, the inorganic layer may further include a thickener and a wetting agent. The types of the thickener and the wetting agent are not particularly limited herein, as long as the objectives of this application can be achieved. For example, the thickener may include, but is not limited to, at least one of sodium carboxymethyl cellulose or lithium carboxymethyl cellulose; and the wetting agent may include, but is not limited to, at least one of dimethyl siloxane, sodium dodecyl sulfate, trialkyl phosphate, methyl decanoate, or dodecyl acetate.

In this application, the thickness of the separator is not particularly limited herein, as long as the objectives of this application can be achieved. For example, the thickness of the separator may be 4 µm to 30 µm.

In this application, the electrochemical device further includes a negative electrode plate. The negative electrode plate includes a negative current collector and a negative electrode material layer disposed on at least one surface of the negative current collector. "The negative electrode material layer is disposed on at least one surface of the negative current collector" means that the negative electrode material layer may be disposed on one surface of the negative current collector or on both surfaces of the negative current collector along the thickness direction of the current collector. It is hereby noted that the "surface" here may be the entire surface region of the negative current collector, or a partial surface region of the negative current collector, without being particularly limited herein, as long as the objectives of the application can be achieved.

The negative current collector is not particularly limited herein, as long as the objectives of this application can be achieved. For example, the negative current collector may include copper foil, copper alloy foil, nickel foil, stainless steel foil, titanium foil, foamed nickel, foamed copper, or composite current collector. As an example, the composite current collector may be a lithium-copper composite current collector, a carbon-copper composite current collector, a nickel-copper composite current collector, or a titanium-copper composite current collector.

In some embodiments of this application, the negative electrode material layer may further include a conductive agent, a binder, and/or a thickener. The types of the conductive agent and the thickener are not particularly limited herein, as long as the objectives of this application can be achieved. For example, the conductive agent and binder may be at least one of the above-mentioned conductive agents and binders. The thickener may include, but is not limited to, at least one of sodium carboxymethyl cellulose or lithium carboxymethyl cellulose. The mass ratio between the negative electrode material, the conductive agent, the binder, and the thickener in the negative electrode material layer is not particularly limited herein, and may be selected by a person skilled in the art as actually required, as long as the objectives of this application can be achieved.

The thickness of the negative electrode material layer is not particularly limited herein, as long as the objectives of this application can be achieved. For example, the thickness of the negative electrode material layer on a single side is 30 µm to 120 µm.

The thickness of the negative current collector is not particularly limited herein, as long as the objectives of this application can be achieved. For example, the thickness of the negative current collector is 4 µm to 15 µm.

The conductive agent is not particularly limited herein, as long as the objectives of this application can be achieved. For example, the conductive agent may include, but is not limited to, at least one of conductive carbon black (Super P), carbon nanotubes (CNTs), carbon fibers, flake graphite, graphene, a metal material, or a conductive polymer. The conductive carbon black may include, but is not limited to, acetylene black or Ketjen black. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole.

The binder is not particularly limited herein, as long as the objectives of this application can be achieved. For example, the binder may include, but is not limited to, at least one of polyacrylic acid, polyacrylic acid sodium, polyacrylic acid potassium, polyacrylic acid lithium, polyimide, polyvinyl alcohol, carboxymethyl cellulose, sodium carboxymethyl cellulose, lithium carboxymethyl cellulose, polyimide, polyamide imide, styrene butadiene rubber, or polyvinylidene difluoride.

The electrochemical device further includes a housing. The housing is configured to accommodate a positive electrode plate, a separator, a negative electrode plate, an electrolyte solution, and other components known in the art for use in an electrochemical device. Such other components are not limited herein. The housing is not particularly limited herein, and may be a housing well-known in the art, as long as the objectives of this application can be achieved. For example, the housing may be a hard housing or a flexible housing. The material of the hard housing may be metal. The type of the metal is not limited herein. The hard housing may be a metallic hard housing known in the art as long as the objectives of this application can be achieved. The flexible housing may be a metallic plastic film such as an aluminum plastic film, a steel plastic film.

The process of preparing the electrochemical device of this application is well known to a person skilled in the art, and is not particularly limited herein. For example, the preparation process of the electrochemical device may include, but is not limited to, the following steps: stacking the positive electrode plate, the separator, and the negative electrode plate in sequence, performing operations as required such as winding and folding to obtain a jelly-roll electrode assembly, putting the electrode assembly into a housing, injecting the electrolyte solution into the housing, and sealing the housing to obtain an electrochemical device. Alternatively, the steps are as follows: stacking the positive electrode plate, the separator, and the negative electrode plate in sequence, and then fixing the four corners of the entire stacked structure by use of adhesive tape to obtain a stacked-type electrode assembly, putting the electrode assembly into a housing, injecting the electrolyte solution into the housing, and sealing the housing to obtain an electrochemical device. In addition, an overcurrent prevention element, a conductive plate, and the like may be placed into the housing as required, so as to prevent the rise of internal pressure, overcharge, and overdischarge of the electrochemical device.

A second aspect of this application provides an electronic device. The electronic device includes the electrochemical device according to any one of the above embodiments of this application.

The electronic device is not particularly limited herein, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

### Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test methods and devices

### Cycle performance test

A lithium-ion battery is placed into a 25 °C thermostat, and left to stand for 30 minutes so that the temperature of the lithium-ion battery is constant. The battery is charged at a constant current of 0.5C until the voltage reaches 4.45 V, and then charged at a constant voltage until the current tapers off to 0.025C. The battery is left to stand for 5 minutes, and then discharged at a constant current of 0.5C until the voltage drops to 3.0 V, thereby completing one cycle. The discharge capacity at this time is recorded as an initial discharge capacity C₁. The battery is charged and discharged for 200 cycles according to the above steps, and the discharge capacity of the lithium-ion battery at the end of the 200^{th} cycle is recorded as a discharge capacity C₂. The cycle capacity retention rate of the lithium-ion battery is calculated. Cycle capacity retention rate = C₂/C₁ × 100%.

### Cycle thickness growth rate test

A battery is charged at a constant current of 0.5C until the voltage reaches 4.45 V, and then charged at a constant voltage until the current tapers off to 0.025C. The battery is left to stand for 5 minutes, and then measured to determine the thickness, recorded as an initial full-charge thickness of the battery. The charge-and-discharge process performed in the above-mentioned cycle capacity retention rate test is repeated here for 500 cycles, and then the thickness of the battery is measured and recorded as a 500^{th}-cycle thickness of the battery.

The difference between the 500^{th}-cycle thickness of the battery and the initial full-charge thickness of the battery is divided by the initial full-charge thickness of the battery to obtain a quotient. The battery thickness is measured with a micrometer at 5 different positions to obtain 5 measured values. The average of the five quotients is the cycle thickness growth rate. A lower cycle thickness growth rate demonstrates higher performance.

### Measurement of the contents of the elements B, P, and S

1 gram of the silicon-carbon negative electrode material is weighed out, and the mass percentages of the elements B, P, and S in the silicon-carbon negative electrode material are measured by using an inductively coupled plasma (ICP) analyzer.

### Silicon content measurement

After being discharged at a current of 0.5C until a voltage of 3.0 V, a lithium-ion battery is disassembled, and a negative electrode plate is taken out. The negative electrode plate is soaked in dimethyl carbonate (DMC) for 20 minutes, and then rinsed with DMC and acetone successively. Subsequently, the negative electrode plate is baked in an oven at 80 °C for 12 hours to obtain a baked negative electrode plate. The negative electrode plate is dried in a vacuum oven at 100 °C for 24 hours. The negative electrode material layer is scraped off the negative electrode plate with a blade to obtain a powdered sample in an amount of 1 gram, and then the mass percent of silicon in the negative electrode material layer is measured by using an inductively coupled plasma (ICP) analyzer.

### Embodiment 1-1

### (1) Preparing a positive electrode plate

LiCoO₂ as a positive active material, Super-P as a conductive agent, and polyvinylidene fluoride (PVDF) as a binder are mixed at a mass ratio of 96 : 2.0 : 2.0, and then N-methyl pyrrolidone (NMP) is added. The mixture is stirred well to obtain a positive electrode slurry in which the solid content is 70 wt%. The positive electrode slurry is applied evenly onto one surface of a 12 µm-thick positive current collector aluminum foil, and dried at 120 °C to obtain a positive electrode plate coated with a 100 µm-thick positive electrode material layer on a single side. The above steps are repeated on the other surface of the aluminum foil to obtain a positive electrode plate coated with the positive electrode material layer on both sides. The positive electrode plate is dried in a 120 °C vacuum, and cold-pressed, cut, and slit to obtain a positive electrode plate of 74 mm × 867 mm in size.

### (2) Preparing a negative electrode plate

A microporous carbon material with a carbon content of 50%, loaded with nano-silicon, and an inorganic coating material sodium tripolyphosphate (Na₅P₃O₁₀) are added to an ethanol solvent to form a suspension, and are ball-milled and evenly dispersed to obtain a mixture. The mixture is filtered and oven-dried to obtain a silicon-carbon negative electrode material coated with an inorganic coating layer on the surface.

The silicon-carbon negative electrode material prepared by the above method, artificial graphite, a conductive agent Super-P, a thickener CMC, and binder SBR are dissolved at a mass ratio of 50 : 46.5 : 1.0 : 1.0 : 1.5 in a deionized water solvent, and mixed well to form a negative electrode slurry. Subsequently, the negative electrode slurry is evenly applied onto negative current collector copper foil in a coating amount of 1.85 g/cm². Subsequently, the coated foil is dried at 85 °C and then cold-pressed, trimmed, cut, and slit into sheets, and then dried in a 110 °C vacuum for 4 hours. Negative tabs are welded to the sheets to form negative electrode plates that meet requirements.

Based on the total mass of the negative electrode material layer, the silicon content complies with the data in Table 1 below. Based on the total mass of the silicon-carbon negative electrode material, the content of the dopant element complies with the data in Table 1 below.

### (3) Preparing an electrolyte solution

In an argon atmosphere glovebox with a water content less than 10 ppm, ethyl propionate, propylene carbonate, and ethyl methyl carbonate are mixed at a ratio of 3 : 4 : 3 to obtain a base solvent. The compound represented by Formula I-1, fluoroethylene carbonate, and a lithium salt LiPF₆ are added into the mixture, dissolved, and mixed well to obtain an electrolyte solution. Based on the total mass of the electrolyte solution, the mass percent of the lithium salt LiPF₆ is 12.5%, the mass percent of the fluoroethylene carbonate is 20%, and the mass percent of the first compound represented by Formula I-1 is 25%. The remainder is the base solvent.

### (4) Separator

A 7 µm-thick porous polyethylene film (supplied by Shanghai SEMCORP) is used as a separator.

### (5) Preparing a lithium-ion battery

The above-prepared positive electrode plate, separator, and negative electrode plate are stacked in sequence such that the separator is located between the positive electrode plate and the negative electrode plate to serve a function of separation. Subsequently, the stacked structure is wound, a positive tab is connected to the positive electrode plate, and a negative tab is connected to the negative electrode plate, thereby obtaining an electrode assembly. The electrode assembly is placed in an aluminum foil pouch. The positive tab and the negative tab are led out from the inner space of the aluminum foil pouch to the outer space of the aluminum foil pouch. The electrode assembly together with the pouch is dehydrated at 80 °C, filled with the above-prepared electrolyte solution, and then subjected to vacuum packaging, static standing, chemical formation, degassing, shaping, and other processes to obtain a lithium-ion battery.

### Embodiments 1-2 to 1-30

These embodiments are the same as Embodiment 1-1 except that during the preparation of the negative electrode plate, the type of the inorganic material coating is adjusted according to Table 1, the mass percent of the dopant element contained in the silicon-carbon negative electrode material and the mass percent of silicon in the negative electrode material layer are adjusted; and during the preparation of the electrolyte solution, the type and mass percent of the compound represented by Formula I and the mass percent of the fluoroethylene carbonate are adjusted according to Table 1, the mass percent of the base solvent is changed accordingly, and the mass percent of the lithium salt LiPF₆ remains unchanged.

### Embodiments 2-1 to 2-7

These embodiments are the same as Embodiment 1-1 except that during the preparation of the electrolyte solution, a nitrile compound is added and the type and the mass percent of the nitrile compound are adjusted according to Table 2, the mass percent of the base solvent is changed accordingly, and the mass percent of the lithium salt LiPF₆ remains unchanged.

### Embodiments 3-1 to 3-15

These embodiments are the same as the corresponding Embodiment 2-3 in the table except that during the preparation of the electrolyte solution, the first constituent and the second constituent are added according to Table 3, the types and mass percentages of the first constituent and the second constituent are adjusted, and the mass percent of the lithium salt LiPF₆ remains unchanged.

### Comparative Embodiment 1

This comparative embodiment is the same as Embodiment 1-1 except that during the preparation of the electrolyte solution, no compound represented by Formula I is added, the mass percent of the base solvent is changed accordingly, and the mass percent of the lithium salt remains unchanged.

### Comparative Embodiment 2

This comparative embodiment is the same as Embodiment 1-1 except that during the preparation of the electrolyte solution, no fluoroethylene carbonate is added, the mass percent of the base solvent is changed accordingly, and the mass percent of the lithium salt remains unchanged.

### Comparative Embodiment 3

This comparative embodiment is the same as Embodiment 1-1 except that during the preparation of the electrolyte solution, the mass percent of the compound represented by Formula I is 1%, the mass percent of the fluoroethylene carbonate is 1%, the mass percent of the base solvent is changed accordingly, and the mass percent of the lithium salt remains unchanged.

### Comparative Embodiment 4

This comparative embodiment is the same as Embodiment 1-1 except that during the preparation of the electrolyte solution, the mass percent of the compound represented by Formula I is 1%, the mass percent of the fluoroethylene carbonate is 35%, the mass percent of the base solvent is changed accordingly, and the mass percent of the lithium salt remains unchanged.

### Comparative Embodiment 5

This comparative embodiment is the same as Embodiment 1-1 except that during the preparation of the electrolyte solution, the mass percent of the compound represented by Formula I is 55%, the mass percent of the fluoroethylene carbonate is 1%, the mass percent of the base solvent is changed accordingly, and the mass percent of the lithium salt remains unchanged.

### Comparative Embodiment 6

This comparative embodiment is the same as Embodiment 1-1 except that during the preparation of the negative electrode plate, the silicon-carbon composite is not coated.

**Table 1**

| | Type of dopant element | Mass percent of dopant element | Compound represented by Formula I | Mass percent of compound represented by Formula I (%) | Mass percent of fluoroethylene carbonate (%) | Mass percent of silicon (%) | Mass percent of base solvent (%) | Cycle capacity retention rate (%) | Cycle thickness growth rate (%) |
|---|---|---|---|---|---|---|---|---|---|
| Embodiment 1-1 | P | 1.00% | I-1 | 25 | 20 | 25 | 42.5 | 86 | 11 |
| Embodiment 1-2 | P | 1.00% | I-1 | 25 | 5 | 25 | 57.5 | 75 | 14 |
| Embodiment 1-3 | P | 1.00% | I-1 | 25 | 10 | 25 | 52.5 | 80 | 13 |
| Embodiment 1-4 | P | 1.00% | I-1 | 25 | 15 | 25 | 47.5 | 82 | 12 |
| Embodiment 1-5 | P | 1.00% | I-1 | 25 | 25 | 25 | 37.5 | 85 | 17 |
| Embodiment 1-6 | P | 1.00% | I-1 | 25 | 30 | 25 | 32.5 | 80 | 20 |
| Embodiment 1-7 | P | 1.00% | I-1 | 3 | 20 | 25 | 64.5 | 78 | 22 |
| Embodiment 1-8 | P | 1.00% | I-1 | 10 | 20 | 25 | 57.5 | 80 | 18 |
| Embodiment 1-9 | P | 1.00% | I-1 | 20 | 20 | 25 | 47.5 | 82 | 14 |
| Embodiment 1-10 | P | 1.00% | I-1 | 35 | 20 | 25 | 32.5 | 83 | 12 |
| Embodiment 1-11 | P | 1.00% | I-1 | 50 | 20 | 25 | 17.5 | 80 | 15 |
| Embodiment 1-12 | P | 1.00% | I-11 | 25 | 20 | 25 | 42.5 | 83 | 11 |
| Embodiment 1-13 | P | 1.00% | I-29 | 25 | 20 | 25 | 42.5 | 85 | 13 |
| Embodiment 1-14 | P | 1.00% | I-1+I-11 | 10+15 | 20 | 25 | 42.5 | 84 | 12 |
| Embodiment 1-15 | P | 1.00% | I-11+I-29 | 10+15 | 20 | 25 | 42.5 | 83 | 13 |
| Embodiment 1-16 | P | 1.00% | I-1 | 25 | 20 | 15 | 42.5 | 84 | 9 |
| Embodiment 1-17 | P | 1.00% | I-1 | 25 | 20 | 30 | 42.5 | 86 | 15 |
| Embodiment 1-18 | P | 1.00% | I-1 | 25 | 20 | 40 | 42.5 | 85 | 20 |
| Embodiment 1-19 | P | 0.10% | I-1 | 25 | 20 | 25 | 42.5 | 78 | 14 |
| Embodiment 1-20 | P | 0.50% | I-1 | 25 | 20 | 25 | 42.5 | 81 | 13 |
| Embodiment 1-21 | P | 1.50% | I-1 | 25 | 20 | 25 | 42.5 | 84 | 12 |
| Embodiment 1-22 | P | 2% | I-1 | 25 | 20 | 25 | 42.5 | 79 | 15 |
| Embodiment 1-23 | B | 0.10% | I-1 | 25 | 20 | 25 | 42.5 | 80 | 15 |
| Embodiment 1-24 | B | 0.50% | I-1 | 25 | 20 | 25 | 42.5 | 82 | 14 |
| Embodiment 1-25 | B | 1.50% | I-1 | 25 | 20 | 25 | 42.5 | 84 | 13 |
| Embodiment 1-26 | B | 2% | I-1 | 25 | 20 | 25 | 42.5 | 81 | 14 |
| Embodiment 1-27 | S | 0.10% | I-1 | 25 | 20 | 25 | 42.5 | 81 | 16 |
| Embodiment 1-28 | S | 0.50% | I-1 | 25 | 20 | 25 | 42.5 | 83 | 14 |
| Embodiment 1-29 | S | 1.50% | I-1 | 25 | 20 | 25 | 42.5 | 85 | 12 |
| Embodiment 1-30 | S | 2% | I-1 | 25 | 20 | 25 | 42.5 | 82 | 15 |
| Comparative Embodiment 1 | P | 1.00% | I-1 | 0 | 20 | 25 | 67.5 | 80 | 25 |
| Comparative Embodiment 2 | P | 1.00% | I-1 | 25 | 0 | 25 | 62.5 | 62 | 12 |
| Comparative Embodiment 3 | P | 1.00% | I-1 | 1 | 1 | 25 | 85.5 | 68 | 8 |
| Comparative Embodiment 4 | P | 1.00% | I-1 | 1 | 35 | 25 | 51.5 | 80 | 28 |
| Comparative Embodiment 5 | P | 1.00% | I-1 | 55 | 1 | 25 | 31.5 | 76 | 14 |
| Comparative Embodiment 6 | / | / | I-1 | I-1 | 25 | 20 | 25 | 74 | 15 |

As can be seen from Embodiments 1-1 to 1-30 and Comparative Embodiments 1 to 6, when the type and the mass percent of the dopant element, the type and the mass percent of the compound represented by Formula I, the mass percent of the fluoroethylene carbonate, and the mass percent of silicon are within the ranges specified herein, the lithium-ion batteries exhibit a relatively high cycle capacity retention rate and a relatively low cycle thickness growth rate.

**Table 2**

| | Nitrile compound | Mass percent of nitrile compound (%) | Mass percent of base solvent (%) | Cycle capacity retention rate (%) | Cycle thickness growth rate (%) |
|---|---|---|---|---|---|
| Embodiment 1-1 | / | / | 42.5 | 86 | 11 |
| Embodiment 2-1 | Succinonitrile | 0.1 | 42.4 | 86.3 | 10.5 |
| Embodiment 2-2 | Succinonitrile | 1 | 41.5 | 87 | 10 |
| Embodiment 2-3 | Succinonitrile | 3 | 39.5 | 88 | 9.5 |
| Embodiment 2-4 | Succinonitrile | 5 | 37.5 | 85 | 11 |
| Embodiment 2-5 | Succinonitrile | 6 | 36.5 | 84 | 14 |
| Embodiment 2-6 | Glutaronitrile | 3 | 39.5 | 87.8 | 9.2 |
| Embodiment 2-7 | Suberonitrile | 3 | 39.5 | 88.3 | 9.6 |

As can be seen from Embodiment 1-1 and Embodiments 2-1 to 2-7, when the type and the mass percent of the nitrile compound fall within the ranges specified herein, the lithium-ion battery exhibits a higher cycle capacity retention rate and a lower cycle thickness growth rate.

**Table 3**

| | Type of first constituent | Mass percent of first constituent (%) | Type of second constituent | Mass percent of second constituent (%) | Mass percent of base solvent (%) | Cycle capacity retention rate (%) | Cycle thickness growth rate (%) |
|---|---|---|---|---|---|---|---|
| Embodiment 2-3 | / | / | / | / | 39.5 | 88 | 9.5 |
| Embodiment 3-1 | Dimethyl carbonate | 5 | / | / | 34.5 | 88.2 | 9.4 |
| Embodiment 3-2 | Dimethyl carbonate | 15 | / | / | 24.5 | 88.5 | 9.2 |
| Embodiment 3-3 | Dimethyl carbonate | 35 | / | / | 4.5 | 88.7 | 9.1 |
| Embodiment 3-4 | Diethyl carbonate | 5 | / | / | 34.5 | 88.5 | 9.3 |
| Embodiment 3-5 | Diethyl carbonate | 15 | / | / | 24.5 | 88.8 | 9.1 |
| Embodiment 3-6 | Diethyl carbonate | 35 | / | / | 4.5 | 89.1 | 9 |
| Embodiment 3-7 | / | / | Propyl propionate | 5 | 34.5 | 88.6 | 9.4 |
| Embodiment 3-8 | / | / | Propyl propionate | 15 | 24.5 | 88.9 | 9.2 |
| Embodiment 3-9 | / | / | Propyl propionate | 35 | 4.5 | 89.2 | 8.9 |
| Embodiment 3-10 | / | / | Ethyl isobutyrate | 5 | 34.5 | 88.6 | 9.4 |
| Embodiment 3-11 | / | / | Ethyl isobutyrate | 15 | 24.5 | 88.9 | 9.2 |
| Embodiment 3-12 | / | / | Ethyl isobutyrate | 35 | 4.5 | 89.2 | 8.9 |
| Embodiment 3-13 | Dimethyl carbonate | 5 | Propyl propionate | 15 | 19.5 | 90.2 | 9 |
| Embodiment 3-14 | Diethyl carbonate | 15 | Ethyl isobutyrate | 5 | 19.5 | 90 | 9.2 |
| Embodiment 3-15 | Diethyl carbonate | 15 | Ethyl isobutyrate | 15 | 9.5 | 90.5 | 9.2 |

As can be seen from Embodiment 2-3 and Embodiments 3-1 to 3-15, when the types and the mass percentages of the first constituent and the second constituent fall within the ranges specified herein, the lithium-ion battery exhibits a higher cycle capacity retention rate, and the cycle thickness growth rate is further reduced. When the first constituent and the second constituent are used in combination concurrently, the cycle capacity retention rate can be further improved.

Described above are merely preferred embodiments of this application that are not intended to limit this application. Any modifications, equivalent replacements, improvements, and the like made without departing from the concept and principles of this application still fall within the protection scope of this application.

## Claims

1. An electrochemical device, comprising a negative electrode plate and an electrolyte solution; wherein the negative electrode plate comprises a negative electrode material layer, and the negative electrode material layer comprises a silicon-carbon negative electrode material;
the silicon-carbon negative electrode material comprises a dopant element, the dopant element comprises at least one of elements B, P, or S; and based on a total mass of the silicon-carbon negative electrode material, a mass percentage of the dopant element is 0.1% to 2%;
the electrolyte solution comprises a compound represented by Formula I and fluoroethylene carbonate; 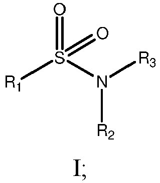
wherein, R₁ is selected from a fluorine atom, a C₁ to C₁₀ alkyl group fully or partially fluorinated, a C₆ to C₁₀ aryl group fully or partially fluorinated, a C₁ to C₁₀ oxygen-containing alkyl group fully or partially fluorinated, or a C₆ to C₁₀ oxygen-containing aryl group fully or partially fluorinated; an O atom in R₁ is not directly bonded to an S atom; and R₂ and R₃ each are independently selected from an unsubstituted or fluorinated C₁ to C₅ alkyl group or an unsubstituted or fluorinated C₆ to C₁₀ aryl group; and R₂ and R₃ are bondable to form a ring.

2. The electrochemical device according to claim 1, **characterized in that**, based on a total mass of the negative electrode material layer, a mass percentage of silicon is 15% to 40%.

3. The electrochemical device according to claim 1 or 2, **characterized in that**, based on a total mass of the negative electrode material layer, a mass percentage of the silicon-carbon negative electrode material is 30% to 85%.

4. The electrochemical device according to any one of claims 1 to 3, **characterized in that** the compound represented by Formula I comprises at least one of the following compounds:

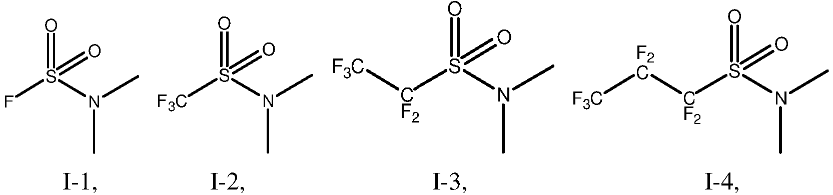

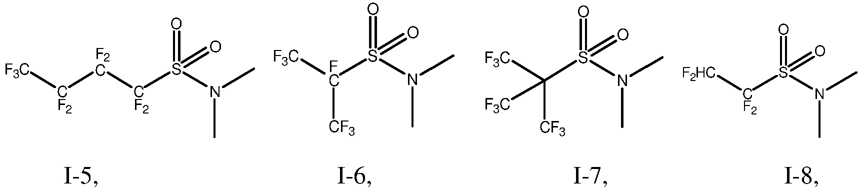

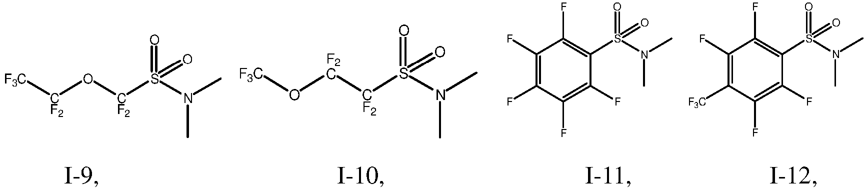

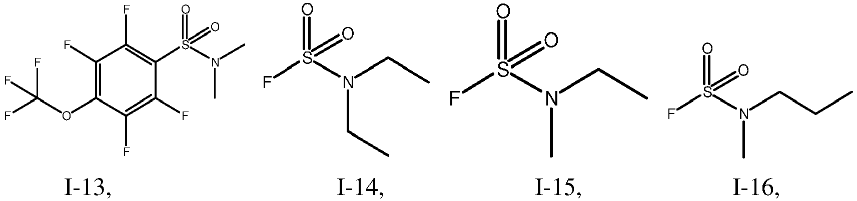

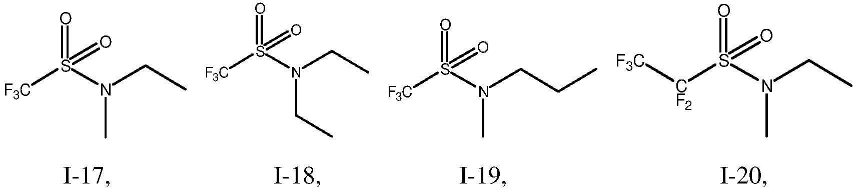

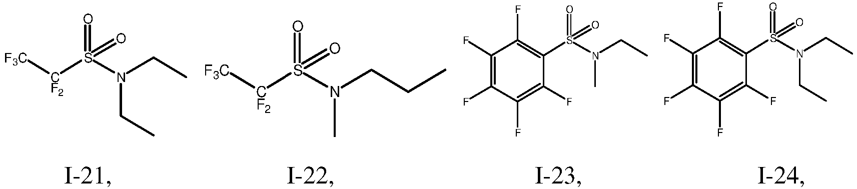

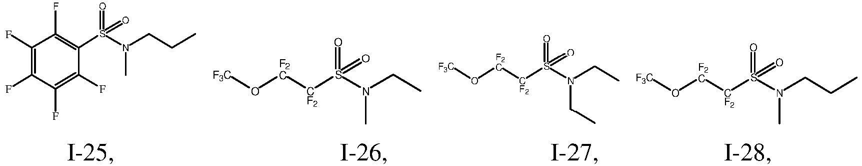

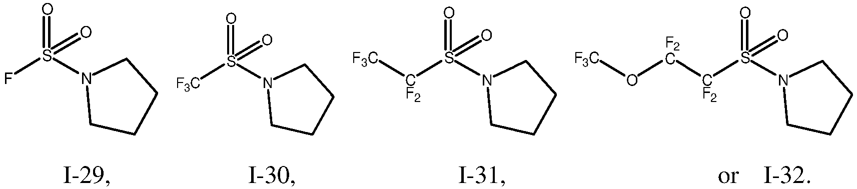

5. The electrochemical device according to any one of claims 1 to 4, **characterized in that**, based on a total mass of the electrolyte solution, a mass percentage of the compound represented by Formula I is 3% to 50%.

6. The electrochemical device according to any one of claims 1 to 5, **characterized in that**, based on a total mass of the electrolyte solution, a mass percentage of the compound represented by Formula I is 3% to 20%.

7. The electrochemical device according to any one of claims 1 to 6, **characterized in that**, based on a total mass of the electrolyte solution, a mass percentage of the fluoroethylene carbonate is 5% to 30%.

8. The electrochemical device according to any one of claims 1 to 7, **characterized in that**, based on a total mass of the electrolyte solution, a mass percentage of the fluoroethylene carbonate is 5% to 15%.

9. The electrochemical device according to any one of claims 1 to 8, **characterized in that**, the electrolyte solution comprises a nitrile compound; and the nitrile compound comprises at least one of succinonitrile, adiponitrile, 1,3,6-hexanetrinitrile, glutaronitrile, methylglutaronitrile, pimelonitrile, suberonitrile, azelanitrile, or sebaconitrile; and based on a total mass of the electrolyte solution, a mass percentage of the nitrile compound is 0.1% to 5%.

10. The electrochemical device according to any one of claims 1 to 9, **characterized in that**, the electrolyte solution further comprises a first constituent; the first constituent comprises at least one of dimethyl carbonate or diethyl carbonate; and based on a total mass of the electrolyte solution, a mass percentage of the first constituent is 5% to 35%.

11. The electrochemical device according to any one of claims 1 to 10, **characterized in that**, the electrolyte solution further comprises a second constituent; the second constituent comprises at least one of ethyl acetate, propyl acetate, propyl propionate, butyl acetate, ethyl butyrate, or ethyl isobutyrate; and based on a total mass of the electrolyte solution, a mass percentage of the second constituent is 5% to 35%.

12. An electronic device, comprising the electrochemical device according to any one of claims 1 to 11.
